Europäisches Patentamt

(19) European Patent Office

Office européen des brevets

(11) Publication number: 0 240 571 B1

## (12) EUROPEAN PATENT SPECIFICATION

(45) Date of publication of patent specification :
05.06.91 Bulletin 91/23

(51) Int. Cl.⁵ : B65D 81/24, B65D 81/34

(21) Application number : 86905422.1

(22) Date of filing : 12.09.86

(86) International application number :
PCT/JP86/00471

(87) International publication number :
WO 87/01679 26.03.87 Gazette 87/07

### (54) MICROWAVE-HEATED COOKED FOODS.

(30) Priority : 12.09.85 JP 202282/85

(43) Date of publication of application :
14.10.87 Bulletin 87/42

(45) Publication of the grant of the patent :
05.06.91 Bulletin 91/23

(84) Designated Contracting States :
DE FR GB IT NL SE

(56) References cited :
EP-A- 0 001 311
EP-A- 0 104 665
EP-A- 0 137 332
JP-A-54 121 337
JP-A-55 126 063
JP-A-59 142 139
JP-U- 5 340 875
US-A- 3 853 612
US-A- 4 230 924

(73) Proprietor : TOPPAN PRINTING CO. LTD.
5-1, Taito 1-chome Taito-ku
Tokyo 110 (JP)

(72) Inventor : NAKAMURA, Hachiro
Toppan Printing Co., Ltd. 5-1, Taito 1-chome
Taito-ku Tokyo 110 (JP)
Inventor : NAKAGAWA, Yoshihiro
Toppan Printing Co., Ltd. 5-1, Taito 1-chome
Taito-ku Tokyo 110 (JP)
Inventor : KOBAYASHI, Yukio Kawasaki
Factory etc.
1-1, Suzukicho Kawasaki-ku
Kawasaki-shi Kanagawa-ken 210 (JP)
Inventor : SASAKI, Hitoshi Kawasaki Factory
etc.
1-1, Suzukicho Kawasaki-ku
Kawasaki-shi Kanagawa-ken 210 (JP)

(74) Representative : Bühling, Gerhard, Dipl.-Chem.
et al
Patentanwaltsbüro Tiedtke-Bühling-Kinne
Grupe-Pellmann-Grams-Struif-Winter-Roth
Bavariaring 4
W-8000 München 2 (DE)

## Description.

The present invention relates to a package as specified in the pre-characterising part of claim 1.

At present, foods are sterilized by a retortable sterilizing process by which sealed food packages can be preserved for along-time at normal temperatures. The sterilization is performed by utilizing a heating medium having a temperature of 100°C or more under pressure. In this case, however, an extremely long period of time such as 15-60 minutes at 120°C is required for satisfying a sufficient sterilizing condition dependent upon the properties of a food (particularly food containing solid matters) to be packaged, because heat for the sterilization which reaches the center of the food is principally determined by heat conduction of the food. For this reason, the packaging material as well as the food have to be exposed to a high temperature for a long period of time, so that a packaging material of high quality is required and high costs are in valved. Besides the touch in eating, taste and color of the food can be damaged disavantagers by. On one hand, a transparent packaging material through which the contents of the package can be watched, has low oxygen gas barrier properties so that such foods after sterilization could not be preserved for a long period of time.

Furthermore, in these retortable sterilizing processes, the pressure regulation for preventing a burst of the package requires high-degree skills.

In the place of such a retortable sterilizing process, another sterilizing process uses heating by means of microwave for a short period of time. Such a sterilizing process wherein the sterilization is carried out by microwave irradiation under pressure has been proposed from the U.S. Army Research Institute. However, as this process comprises microwave irradiation under pressure, the pressure regulation is as difficult as in a retortable sterilizing process. Besides the sterilizer thereof is complicated and expensive, so that it was difficult to generally use the process.

Another sterilizing process utilizing microwave, is disclosed in Japanese Patent Publication No. 26949/F. In this process packages containing foods to be sterilized are placed in a supporting holder made of a microwave permeable material, and the food is irradiated by microwave from the outside of the F 1983, from which the precharacterising part of claim 1 starts out. supporting holder to sterilize the food. While the sterilization can be effected by placing packages in a supporting holder and irradiating the packages with microwave, the known process involves such disadvantages that there arises unevenness in heating, and that remarkably scorched foods are observed particularly in the case where foods of a low moisture content are sterilized.

Moreover, although a process and an apparatus for continuously conducting microwave sterilization under normal pressures have been proposed, it was difficult to use a transparent packaging material having high barrier properties, by which an extended long-term preservation could be obtained.

It is an object of the present invention to provide a package comprising a microwave heated cooked food the contents of which are visible through the packaging material and which can be preserved for a long period of time at ordinary temperatures.

More specifically, the object of the invention resides in manufacture of a package comprising a heat-sealed conformed and cooked food which is obtained by continuously irradiating the sealed food with microwave under normal pressures to efficiently sterilize the food without damaging the quality of the food, so that the contents of the sealed cooked food may be watched and a deterioration in quality of the food can be prevented during preservation thereof at ordinary temperatures.

In order to meet the above object, it is necessary that the foods are sealed with such a packaging material which is sufficiently microwave permeable and transparent and has barrier properties with respect to oxygen and moisture so that no changes of the food ingredients are caused and no physical damage of the package during the sterilization, cooling and distribution steps occurs.

The above problems have been solved by means of a package comprising a heat-sealed flexible container and cooked food which has been sterilized by microwave irradiation in said container, said container being made of a transparent laminate comprising F.

The container can be a packaging pouch, a molded container or a bowl.

The sealed package containing the food is placed into a supporting holder, and heated in a microwave irradiation Fat least one heat resistant synthetic resin film and at least one heat-sealable, heat resistant, synthetic resin film as the inner most layer, wherein said laminate comprises a thin layer of one or more metallic oxides as an intermediate layer oven at a temperature of 100°C or above to sterilize the food.

In the above case, the microwave permeate the food to a certain extent by directly heating the innerside thereof so that a temperature at the innermost part of the food can be raised within a short period of time. When a microwave permeable supporting holder is used, a burst of the package can be prevented by steam pressure.

Since the packaging material has a laminate structure consisting of a heat resistant synthetic resin film/a metallic oxide thin layer/a heat-sealable, heat resistant synthetic resin film the microwaves permeate the packaging material and the contents of the package can be observed. There is no deterioration of gas barrier proper-

2

ties during of after microwave irradiation, so that the food is preserved at normal temperatures for a long period of time.

Brief Description of the Drawings

Fig. 1 is a partial sectional view showing an example of a packaging material used for the flexible container according to the present invention ;

Fig. 2 is an explanatory view, in section, showing the package according to the present invention ;

Fig. 3 is an explanatory view, in section, showing a container in the shape of a tray ;

Fig. 4 is an enlarged partial sectional view showing a cylindrical container used in the present invention ;

Fig. 5 is a general view of Fig. 4 wherein the section of the cylindrical container is enlarged ;

Fig. 6 is a sectional view showing a cylindrical container used according to the present invention ; and

Fig. 7 is a sectional view showing a container of a polypropylene single layer having a thickness of 300 µm used in a conventional method.

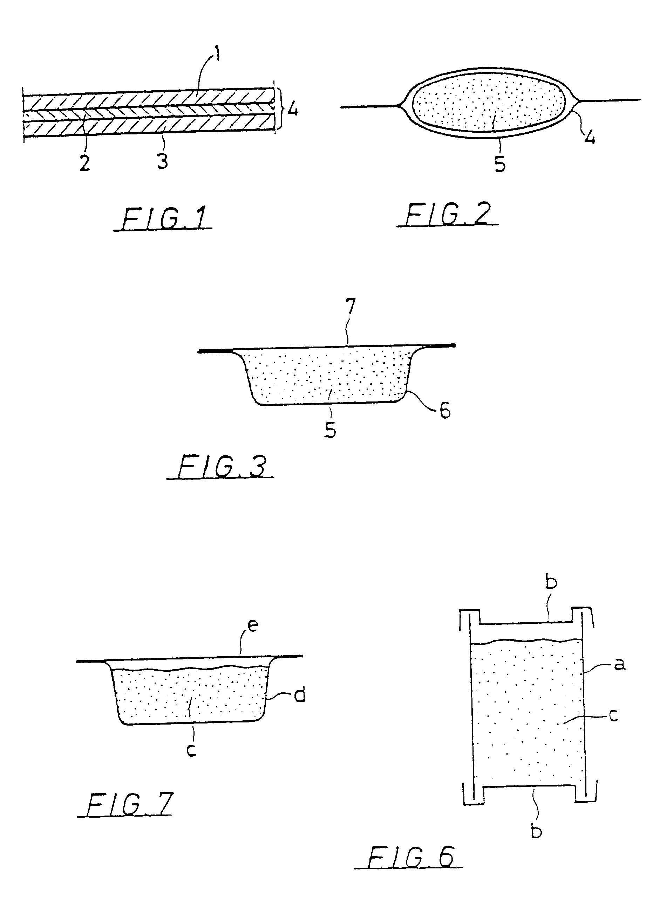

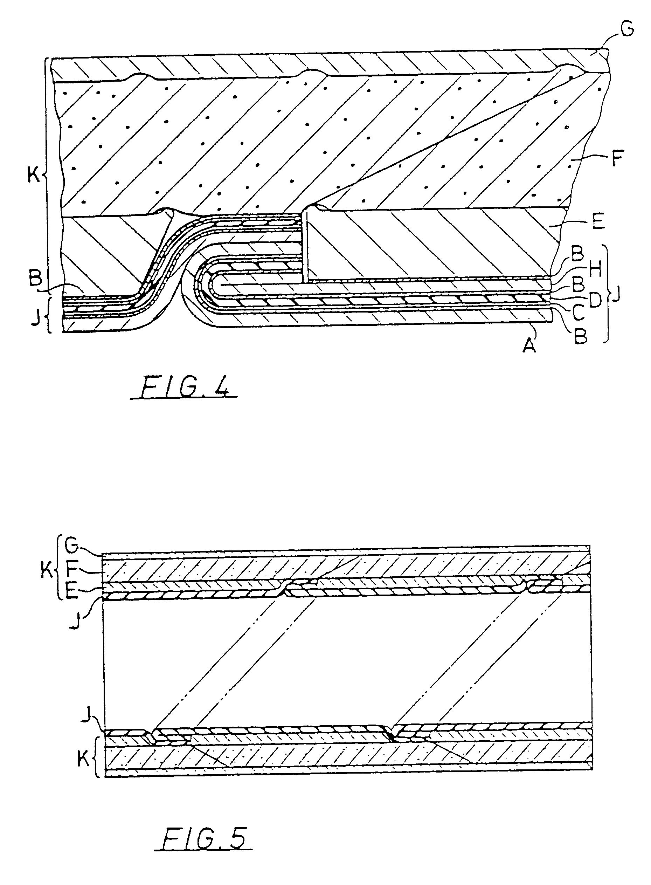

In these Figures, reference number 1 represents a heat resistant synthetic resin film base alone made of polyester or a laminate thereof, 2 a layer of metallic oxide, 3 a heat-sealable heat resistant synthetic resin film, 4 a packaging material composed of these laminates, 5 a food, and 6 and 7 a tray and a cover made of a similar packaging material 4, respectively. In Figs. 4 and 5, reference character A represents a cast polypropylene layer, B a urethane adhesive layer, C a metallized layer of silicon oxide, D a polyester layer, H a cast polypropylene layer, J a laminate composed of said layers, K an outer packaging material composed of a 200 µm cast polypropylene layer E, a 500 µm polypropylene layer F, and a 30-50 µm polypropylene layer G, respectively. The outer packaging material K is bonded to the laminate J by the urethane adhesive B of 4.5 g/m².

In Fig. 6, reference character a represents a cylindrical container, b a cover, and c a food, respectively. Moreover, Fig. 7 shows a conventional retortable pouch wherein reference character d represents a cup-type container comprising of a 300 µm polypropylene single layer and e a sealing cover material made of a 80 µm polypropylene single layer, respectively.

First, the transparent laminate used according to the present invention will be described herein below.

The transparent laminate used according to the present invention requires at least heat resisting properties for high-temperature sterilization, physical strength for high-temperature sterilization under normal pressures, transparency by which the contents of the package can be observed, microwave permeability and barrier properties with respect to gas such as oxygen as well as moisture for providing a long-term preservation at normal temperatures.

More specifically, a heat resistant film of materials such as polyester, nylon polypropylene or the like alone or a laminate thereof is used as a heat resistant synthetic resin film base material. Furthermore, a heat resistant polyolefin such as cast polypropylene or the like alone or a laminate thereof or another heat resistant film such as polyester, nylon®, polypropylene or the like, e.g. a polyester film/cast polypropylene film laminate, an oriented nylon® film/cast polypropylene film laminate, an oriented polypropylene film/cast polypropylene film laminate or the like is used as a heat-sealable, heat resistant film to form the inner most layer.

An example of the metallic oxide for the intermediate layer disposed between the aforesaid base material and said heat-sealable film includes titanium oxide, zinc oxide, aluminum oxide, silicon oxide, magnesium oxide, manganese oxide, and other microwave permeable metallic oxides. Aluminum oxide and silicon oxide are optimally suited in practical use, besides aluminum oxide/silicon oxide, mixtures are also effective.

The metallic oxide thin layer used in the present invention can be generally formed on the surface of a synthetic film by a vacuum metallizing process or a sputtering process, and a layer thickness of 50-100 nm (500-1000 Å) is desirable. Examples for the relationship between metallized layer thickness and barrier properties will be shown in Table 1.

Table 1

| Metallized Layer Thickness (nm) | Amount of Oxygen $(O_2)$ Permeated $(cc/m^2.24 \ hr.atm. \ 25^{\circ}C)$ | Moisture Permeability $(g/m^2. \ 24 \ hr.)$ |
|---|---|---|
| 50 | 0.9 | 2.0 |
| 60 | 0.5 | 1.5 |
| 75 | 0.5 | 1.2 |
| 100 | 0.2 | 0.8 |

Table 1 indicates examples of barrier properties in the case where a silicon oxide thin layer having a thickness of 50-100 nm is formed on a polyester film having a thickness of 25 μm in accordance with a vacuum metallizing method.

While the process for laminating these films is not particularly limited to a specific method, it is generally known that the adhesive strenght of the films is improved by providing a modified polyolefin (for example, polyolefins containing carboxyl group) layer between the heat resistant sealable material layer and the metallic oxide thin layer.

Next, a microwave cooking method for preparing the package according to the present invention will be described hereinbelow.

A container in the shape of a pouch is prepared from the heat resistant laminated material, and charged with a food, particularly a cooked food containing solid matter through the opening of the pouch. The opening of the pouch is sealed so as to leave a vent at a part of the opening, then placing the pouch charged with food in a supporting holder provided with a receiving part which has substantially the same configuration as that of the charged pouch and such a capacity that said charged pouch can be incorporated. This part is prepared from a microwave permeable material such as a synthetic resin, Teflon (a trademark), polycarbonate, polyphenylene sulfide, polyacetal as well as various ceramics. Such supporting holders each containing the charged pouch are continuously placed in a primary microwave irradiation oven to heat them at a temperature of about 100°C, by sealing each vent of these pouches. Thereafter the supporting holders with the charged pouches are continuously placed in a secondary microwave irradiation oven to heat them up to a prescribed temperature of more than 100°C, and are cooled immediately in order to take out the package containing the cooked food. When compared with a conventional heat sterilization, the touch in eating taste, color, or texture of the food is less influenced by the heat sterilization method the so that cooked foods which can be preserved at normal temperatures can be obtained.

Although the primary heating was carried out under such a condition that the pouch was charged with cooked food and sealed thereafter leaving a vent on a part of the opening, such a pouch may be heated in the primary microwave irradiation oven without any modification after sealing the pouch, so that no vent at the opening is left. Furthermore, the heating operation may not only be carried out in two microwave irradiation ovens but also by means of one microwave irradiation oven. Even if one time heating is carried out by means of microwave irradiation, more effective sterilization can be attained by turning over or vibrating said package.

Further a molded container obtained by deep-drawing the aforesaid laminated material is charged with contents to be packaged, and then the container is sealed with the same laminated material. Alternatively a cylindrical container wherein a body part of the container is prepared by using the laminated material, can also be used and the top and the bottom thereof are sealed with covering materials, respectively. When these containers are subjected to the same treatment as mentioned above in accordance with the present invention, cooked foods which can be preserved at normal temperatures for a long period of time are obtained.

[Test Example 1]

The results of taste and organoleptic examinations after the preservation for 6 months immediately after heat sterilization of various cooked or processed foods in accordance with a conventional retortable method and the method of the present invention, respectively, will be shown hereinafter. The taste and organoleptic examinations were effected by ten panelists with respect to appearance, smell, taste, changes in texture, existence of foul smell and the like of the cooked or processed foods, and the results obtained were indicated by score and specially mentioned details. The score was represented in such a manner that the best level in various items of the food was evaluated with a maximum of 5 points, by conducting a relative comparison. A standard for the score is as follows.

```
5.0 ... the best

4.0 ... good

3.0 ... limit for commercial value

2.0
    } no commercial value
1.0

  0 ... uneatable
```

Outlines of a prior art or conventional method as well as the methods according to the present invention are as described below.

Prior Art Method

Various foods were cooked and processed, and then a pouch made of polyester (12 μm)/vinylidene chloride (20 μm)/cast polypropylene (70 μm) was charged with the cooked and processed foods and the pouch was sealed. Thereafter the sealed pouch was statically retorted (including cooling period of time) in hot water of 125°C. The taste and organoleptic evaluations were made upon these products immediately after the retortable sterilization as well as upon the products which were left naturally in a room (20-30°C) for six months, respectively.

Method according to the Present Invention

Various foods were cooked and processed, and then a pouch made of polyester (25 μm)/silicon oxide (60 nm)/cast polypropylene (70 μm) was charged with the cooked and processed foods and sealed while leaving a vent on a part of the pouch. The resulting package of the so charged pouch at normal temperatures was irradiated in a primary microwave oven having an oscillation output of 3 KW for 3 minutes, and heated up to 95°C. Thereafter the vent was sealed while maintaining the temperature for 3 minutes, and the so sealed pouch was placed in a secondary microwave oven having an oscillation output of 1 KW to irradiate the sealed pouch for 3 minutes and was maintaining at 125°C for 6 minutes, and then cooled for 3 minutes. The taste and organoleptic evaluations were made upon these products immediately after the heat sterilization as well as upon the products which were left naturally in a room (20-30°C) for six months, respectively, as in the case of the prior art method. The charged amount of each package was 150 g.

EP 0 240 571 B1

Table 2: Taste and Organoleptic Examinations Immediately After Heat Sterilization and After Preservation for 6 Months in Prior Art and the Present Invention Methods

| Food | Principal Raw Material | Heating Sterilization Time | Taste and Organoleptic Tests Immediately After Heating Sterilization — Prior Art Evaluation | Color | The Others | Present Invention Evaluation | Color / The Others | After Preservation for 6 Months — Prior Art Evaluation | Color | The Others | Present Invention Evaluation | Color | The Others |
|---|---|---|---|---|---|---|---|---|---|---|---|---|---|
| A. 1. Boiled Short necked Clam in Water | Short necked Clam, Salt | Prior Art: 40 min. Present Invention: 20 min. | 4.0 | Slightly Browned | Slight-ly Decrease In Flavor | 5.0 | good | 2.0 | Browned | Inferior In Both Flavor & Taste No Commercial Value. | 4.0 | Slightly Browned | Slight Decrease in Flavor |
| 2. Boiled Bamboo Shoot | Bamboo Shoot | Prior Art: 55 min. Present Invention: 25 min. | 4.5 | Good | Slight-ly Bad Feeling in Eating | 5.0 | do. | 3.5 | Slightly Browned | Change in Flavor, Bad Feeling in Eating, | 4.3 | do. | Slight Shortage for Touch in Eating |
| 3. Mushroom | Mushroom, Salt, L-Ascorbic Acid, pH-modifier, Relishes | Prior Art: 40 min. Present Invention: 20 min. | 4.8 | | do. | 5.0 | do. | 3.5 | | do. Change in Flavor, Shortage for Touch in Eating, | 4.5 | do. | Slight Decrease in Flavor |
| B. 4. For Chinese "Mabo-Egg-plant" Use | Soy, Sake, Edible Oil, Sugar, Tomato Ketchup, Ginger, Relishes Eyes of Scallops, Beef Extract, Salt | Prior Art: 20 min. Present Invention: 12 min. | 4.0 | Slightly Browned | Slight-ly Decrease In Flavor | 5.0 | good | 2.0 | Slightly Browned | Decrease In Flavor, Slightly Salty, No Commercial Value. | 4.0 | Slightly Browned | Slight Decrease in Flavor |
| 5. For Borsch Use | Tomato, Red Beets, Salt, Relishes, Spice, Meat Extract, Vegetable Extract | Prior Art: 20 min. Present Invention: 12 min. | 4.0 | Good | do. | 5.0 | do. | 2.0 | Redness of Tomato Browned | Decrease In Flavor, Change in Flavor, No Commercial Value. | 4.3 | Redness of Tomato Slightly Browned | do. |

EP 0 240 571 B1

Table 2: Taste and Organoleptic Examinations Immediately After Heat Sterilization and After
Preservation for 6 Months in Prior Art and the Present Invention Methods (contd.)

| Food | Principal Raw Material | Heating Sterilization Time | Organoleptic Examination | | | | | | | | | | | | |
|---|---|---|---|---|---|---|---|---|---|---|---|---|---|---|---|
| | | | Taste and Organoleptic Tests Immediately After Heating Sterilization | | | | | | Taste and Organoleptic Tests After Preservation for 6 Months | | | | | | |
| | | | Prior Art | | | Present Invention | | | Prior Art | | | Present Invention | | | |
| | | | Evaluation | Color | The Others | Evaluation | Color | The Others | Evaluation | Color | The Others | Evaluation | Color | The Others | |
| B. 6. For Pork Curry Use | Edible Oil, Milk, Flour Sugar, Salt Protein Hydrolysate, Meat Extract Flavor Vegetable | Prior Art: 25 min. Present Invention: 13 min. | 5.0 | Good | | 5.0 | Good | | 3.5 | Browned | Decrease in Curry Flavor | 4.5 | Slightly Browned | Slight Decrease in Flavor | |
| C. 7. Soup (Corn Cream) | Sweet Corn, Milk, Flour Sugar, Salt Edible Oil, Relishes, Protein Hydrolysate, Meat Extract Spice | Prior Art: 30 min. Present Invention: 15 min. | 4.5 | Slightly Browned | Slight Decrease in Corn Flavor | 5.0 | do. | | 3.5 | Browned | Decrease in Flavor, Change in Flavor | 4.5 | Slightly Browned | Slight Decrease in Corn Flavor | |
| 8. Boiled Land & Sea Foods | Bamboo Shoot Flaked Tuna, Konjak, Relishes | Prior Art: 50 min. Present Invention: 25 min. | 4.5 | Good | Slight Decrease in Flavor | 5.0 | do. | | 3.5 | do. | Decrease in Flavor, Slight Change in Flavor | 4.5 | do. | Slight Decrease in Flavor | |
| 9. Hamburger Steak | Pork, Beef, Onion, Potato, Bread Crumb, Flour, Edible Oil, Relishes | Prior Art: 35 min. Present Invention: 18 min. | 4.5 | do. | Slight Shortage for Touch in Eating | 5.0 | do. | | 0 | Violently Browned | Strong Change in Flavor, Less than Edible Limit | 3.5 | do. | Slight Decrease in Flavor, Some Change in Flavor | |

Table 2: Taste and Organoleptic Examinations Immediately After Heatterilization and After Preservation for 6 Months in Prior Art and the Present Invention Methods (contd.)

| Food | Principal Raw Material | Heating Sterilization Time | Organoleptic Examination | | | | | | | | | | |
|------|----------------------|---------------------------|---|---|---|---|---|---|---|---|---|---|---|
| | | | Taste and Organoleptic Tests Immediately After Heating Sterilization | | | | | | Taste and Organoleptic Tests After Preservation for 6 Months | | | | |
| | | | Prior Art | | | Present Invention | | | Prior Art | | | Present Invention | | |
| | | | Evaluation | Color | The Others | Evaluation | Color | The Others | Evaluation | Color | The Others | Evaluation | Color | The Others |
| C. 10. Meatball | Pork, Beef, Onion, Bread Milk, Egg, Relishes | Prior Art: 45 min. Present Invention: 25 min. | 4.5 | Good | Slight Shortage for Touch in Eating | 5.0 | Good | | 0 | Violently Browned | Strong Change in Flavor, Less than Edible Limit | 3.8 | Slightly Browned | Slight Decrease in Flavor |

A: Raw Material Foods
B: Blended Condiments
C: Fabricated Foods

EP 0 240 571 B1

[Test Example 2]

The sterilization according to the prior art method was carried out in the same manner as that of Test Example 1, but the heating sterilization of the present invention was conducted as follows.

Various foods were cooked and processed, and then a pouch made of polyester (25 μm)/silicon oxide (60 nm)/cast polypropylene (70 μm) was charged with the cooked and processed foods and sealed. Thereafter the resulting package of the so charged pouch was irradiated in a microwave oven having an oscillation output of 4 KW for 4 minutes while turning over the package together with a supporting holder. After maintaining the package at 125°C for 3 minutes, it was then cooled for 4 minutes, thereby performing heat sterilization. Taste and organoleptic evaluations were made upon these products immediately after the heat sterilization as well as upon the products which were left naturally in a room (20-30°C) for six months, respectively, as in the case of the prior art method.

The test was conducted upon the foods designated by reference numerals 1, 2, 3, 8, 9, and 10 in Table 2. The results obtained in accordance with the prior art and the present invention methods were indicated in Items 1, 2, 3, 8, 9, and 10 of Table 2, respectively.

[Test Example 3]

In accordance with a prior art method, white stew and edible wild plants were cooked and processed. In this, a tray of 80 × 100 × 20 mm (160 cm³ capacity) was fabricated by vacuum-molding a laminated material made of cast nylon® film (20 μm)/vinylidene chloride film (20 μm)/cast polypropylene film (700 μm). Furthermore, a covering material was prepared from a laminated material made of polyester film (25 μm)/vinylidene chloride film (20 μm)/cast polypropylene film (50 μm). The tray was charged with 150 g of the above described foods and packaged with the covering material, respectively, and thereafter these trays were subjected to heat sterilization by utilizing a standing retortable apparatus in hot water of 125°C.

Taste and organoleptic evaluations were made upon these products prior to and after the sterilization as in the case of

Test Example 1.

In accordance with the present invention, a tray of 80 × 100 × 20 mm (160 cm³ capacity) was fabricated by vacuum-molding a laminated material made of cast nylon® film (20 μm)/silicon oxide (100 nm)/cast polypropylene film (700 μm). On one hand, a covering material was prepared from a laminated material made of polyester film (25 μm)/silicon oxide (60 nm)/cast polypropylene film (50 μm). The tray was charged with 150 g of the same foods as those of the aforesaid prior art method and packaged with the covering material respectively. These packages were placed on a supporting holder as in Test Example 1. These packages were irradiated with microwaves in a microwave oven of 4 KW for 4 minutes and maintained for 3 minutes. Thereafter the so treated packages were cooled for 3 minutes.

Taste and organoleptic evaluations were made upon these products in a similar manner to those described above.

The results are indicated in Table 3.

Table 3: Taste and Organoleptic Examinations Immediately After Heat    Sterilization and After
Preservation for 6 Months in Prior Art and the Present Invention Methods

| Food | Principal Raw Material | Heating Sterilization Time | Organoleptic Examination | | | | | | | | | | | |
|---|---|---|---|---|---|---|---|---|---|---|---|---|---|---|
| | | | Taste and Organoleptic Tests Immediately After Heat    Sterilization | | | | | | Taste and Organoleptic Tests After Preservation for 6 Months | | | | | |
| | | | Prior Art | | | Present Invention | | | Prior Art | | | Present Invention | | |
| | | | Evaluation | Color | The Others | Evaluation | Color | The Others | Evaluation | Color | The Others | Evaluation | Color | The Others |
| White Stew | Milk, Butter Flour, Carrot, Potato Meat, Onion Spice | Prior Art: 30 min. Present Invention: 10 min. | 3.0 | Browned | Strong Milk Smell | 5.0 | Good | | 2.0 | Remarkably Browned | No Commercial Value Change in Flavor Flavorless | 4.0 | Slightly Browned | Slight Decrease in Flavor |
| Boiled Wild Plants in Water | Bamboo Shoot, Champignon, Brake, Jew's-ear | Prior Art: 25 min. Present Invention: 10 min. | 3.5 | Good | Decrease in Feeling in Eating of Champignon | 5.0 | Good | Good Feeling in Eating | 3.0 | Slightly Browned | Gets out of Shape of Champignon | 4.5 | Slightly Browned | Slight Shortage for touch in Eating |

EP 0 240 571 B1

[Test Example 4]

After cooking or processing the foods shown in Table 4, the resulting packages were heated to sterilize the foods in accordance with a prior art and the present invention methods, respectively. Taste and organoleptic evaluations were made upon these products immediately after the heat sterilization and upon the products which were preserved for six months after the sterilization, respectively, and the results will be shown in the Table 4. In the above case, the procedure for taste and organoleptic evaluations as well as the standard therefor are identical with those of Test Example 1.

Prior Art Method

The respective foods were cooked and processed. For this method, a cup-like container d having a dimension of 80 mm$\phi$ × 40 mmH and shown in Fig. 7 was prepared by pressure-forming a polypropylene single layer having a thickness of 300 $\mu$m. The container was charged with 160 g of the food c, and sealed with the polypropylene single layer film e having a thickness of 80 $\mu$m. Then, the resulting package was subjected to standing retortable sterilization in hot water of 125°C. Taste and organoleptic evaluations were made upon these products immediately after the retortable sterilization and upon the products which were left naturally in a room (20-30°C) for six months, respectively.

Method of the Present Invention

The laminated film J was prepared by metallizing 60 nm of silicon oxide on a polyester film having a thickness of 25 $\mu$m, coating the metallized surface with 4.5 g/m$^2$ of a urethane adhesive to bond a cast polypropylene film having a thickness of 70 $\mu$m onto said metallized surface, and further coating the opposite side of the silicon oxide with 4.5 g/m$^2$ of the urethane adhesive to bond a cast polypropylene film having a thickness of 30 $\mu$m onto said opposite side of the metallized surface. A spirally formed body of a cylindrical container was fabricated from the aforesaid laminated film as shown in Figs. 4 and 5.

The body of this cylindrical container has a configuration as shown in Fig. 4 which is an enlarged sectional view of the cylindrical container body. Fig. 5 which is a general view shows the section of said cylindrical container in an enlarged manner. More specifically, the laminated material J having the silicon oxide metallized layer as an intermediate layer used in the present invention is composed of, from the inside towards the outside thereof, a cast polypropylene layer A having a thickness of 70 $\mu$m, 4.5 g/m$^2$ of urethane adhesive B, a silicon monoxide metallized layer C having a thickness of 60 nm, a polyester layer D having a thickness of 25 $\mu$m, 4.5 g/m$^2$ of urethane adhesive B, and a cast polypropylene layer H having a thickness of 30 $\mu$m. Moreover, the outer packaging material K composed of a cast polypropylene layer E having a thickness of 200 $\mu$m, polypropylene layer F having a thickness of 500 $\mu$m, and a polypropylene layer G having a thickness of 30-50 $\mu$m, is applied by 4.5 g/m$^2$ of urethane adhesive B.

The body of cylindrical container a as described above is fitted with a bottom cap b prepared from a laminated plastic material by means of injection molding to obtain a container of 52.3 mm$\phi$ × 90 mmH as shown in Fig. 6. On one hand, the respective foods c were cooked and processed, and said container was charged with 160 g of each food. The so charged container was fitted with an upper cap b made of the same laminated plastic material as the bottom cap b to seal the container. Thereafter, the sealed container was subjected to heat sterilization by repeating such an operating cycle as irradiation for 4 minutes with 4 KW output → holding for 2 minutes → irradiation for 2 minutes → holding 2 minutes until a prescribed sterilization is attained in a microwave irradiation oven while rotating of (moving) vibrating the container together with a supporting holder, and then cooling the container. Taste and organoleptic evaluations were made upon these products immediately after the heat sterilization as well as upon the products which were left naturally in a room (20-30°C) for six months, respectively, as in the case of the prior art method. The results obtained are shown in Table 4.

Table 4: Taste and Organoleptic Examinations Immediately After Heat Sterilization and After Preservation for 6 Months in Prior Art and the Present Invention

| Food | Principal Raw Material | Heating Sterilization Time | Organoleptic Examination | | | | | | | | | | | |
|---|---|---|---|---|---|---|---|---|---|---|---|---|---|---|
| | | | Taste and Organoleptic Tests Immediately After Heat Sterilization | | | | | | Taste and Organoleptic Tests After Preservation for 6 Months | | | | | |
| | | | Prior Art | | | Present Invention | | | Prior Art | | | Present Invention | | |
| | | | Evaluation | Color | The Others | Evaluation | Color | The Others | Evaluation | Color | The Others | Evaluation | Color | The Others |
| 1. For Borsch Use | Tomato, Red Beets, Salt Relishes, Spice, Meat Extract Vegetable Extract | Prior Art: 50 min. Present Invention: 16 min. | 4.0 | Good | Slight Decrease in Flavor | 5.0 | Good | | 1.0 .1 ! | Tomato's Redness Browned | Decrease in Flavor, Change in Flavor, No Commercial Value | 4.3 | Tomato's Redness Slightly Browned | Slight Decrease in Flavor |
| 7. Soup (Corn Cream) | Sweet Corn, Milk, Flour Sugar, Salt Edible Oil, Relishes, Protein Hydrolysate, Meat Extract, Spice | Prior Art: 60 min. Present Invention: 20 min. | 4.5 | Slightly Browned | Slight Decrease in Corn Flavor | 5.0 | do. | | 2.0 | Browned | do. | 4.5 | Slightly Browned | Slight Decrease in Corn Flavor |

(Heating Sterilization Time extends from the start of heating to the completion of cooling)

As indicated above, the present invention method can provide clearly a product of higher quality than that processed by prior art method, besides larger differences are observed therebetween after preservation for 6 months.

EP 0 240 571 B1

## Claims

1. Package comprising a heat-sealed flexible container and cooked food which has been sterilized by microwave irradiation in said container, said container is made of a transparent laminate comprising at least one heat resistant synthetic resin film and at least one heat-sealable, heat resistant synthetic resin film as the innermost layer, characterized in that said laminate comprises a thin layer of one or more metallic oxides as an intermediate layer.

2. Package as claimed in claim 1 wherein said metallic oxide is silicon oxide.

## Ansprüche

1. Packung, die aus einem heißgesiegelten flexiblen Behälter und zubereiteter Speise besteht, die in dem Behälter durch Mikrowellenbestrahlung sterilisiert worden ist, wobei der Behälter aus einem durchsichtigen Schichtstoff hergestellt ist, der mindestens eine hitzebeständige Kunstharzfolie und als innerste Schicht mindestens eine heißsiegelfähige, hitzebeständige Kunstharzfolie enthält, **dadurch gekennzeichnet**, daß der Schichtstoff als Zwischenschicht eine dünne Schicht aus einem oder mehr als einem Metalloxid enthält.

2. Packung nach Anspruch 1, bei der das Metalloxid Siliciumoxid ist.

## Revendications

1. Emballage comprenant un récipient souple thermosoudé et un aliment cuit qui a été stérilisé par exposition à des micro-ondes dans ledit récipient, ce récipient étant constitué par un stratifié transparent comportant au moins un film d'une résine synthétique résistant à la chaleur et au moins un film d'une résine synthétique résistant à la chaleur et thermosoudable en tant que couche intérieure, caractérisé en ce que ce stratifié comprend une mince couche d'un ou de plusieurs oxydes métalliques en tant que couche intermédiaire.

2. Emballage selon la revendication 1, dans lequel l'oxyde métallique est un oxyde de silicium.

FIG.1

FIG.2

FIG.3

FIG.7

FIG.6

*FIG. 4*

*FIG. 5*